# EUROPÄISCHE PATENTSCHRIFT

(11) **EP 2 231 427 B1**
(45) Veröffentlichungstag und Bekanntmachung des Hinweises auf die Patenterteilung: **18.05.2011**
(21) Anmeldenummer: 08862447.3
(22) Anmeldetag: 08.12.2008
(51) Int. Cl.: B60G 17/02, F16F 9/54

(54) **FEDERBEINANORDNUNG FÜR RADAUFHÄNGUNGEN VON KRAFTFAHRZEUGEN**
SPRING STRUT ARRANGEMENT FOR WHEEL SUSPENSIONS OF MOTOR VEHICLES
ENSEMBLE JAMBE DE FORCE POUR DES SUSPENSIONS DE ROUE DE VÉHICULES AUTOMOBILES

(30) Priorität: 14.12.2007 DE 102007060422
(43) Veröffentlichungstag der Anmeldung: 29.09.2010
(73) Patentinhaber: Audi AG, 85045 Ingolstadt (DE)
(72) Erfinder: MICHEL, Wilfried, 93339 Riedenburg (DE)
(74) Vertreter: Asch, Konrad
(86) Internationale Anmeldenummer: PCT/EP2008/010384
(87) Internationale Veröffentlichungsnummer: WO 2009/077099

(56) Entgegenhaltungen:
- EP-A- 1 479 542
- EP-A- 1 681 189

## Beschreibung

Die Erfindung betrifft eine Federbeinanordnung für Radaufhängungen von Kraftfahrzeugen gemäß dem Oberbegriff des Patentanspruches 1.

Für eine aktive dynamische Höhenverstellung eines Fahrzeuges sind verschiedene hydraulische, hydraulisch/pneumatische sowie rein elektrische Systeme mit einer vollständig elektrischen Aktuatorik bekannt. Ein für eine solche Höhenverstellung geeignetes "aktives" Federbein weist eine Tragfeder und eine Speicherfeder auf, die jeweils durch einen Verstellfederteller getrennt sind. Der Verstellfederteller wird bei der Höhenverstellung mit Stellkräften beaufschlagt. D. h., der Verstellfederteller legt je nach Bedarf einen von der Steuerung vorgegebenen axialen Weg zurück, und erzeugt somit letztliche eine Stellkraft am Rad. Die Hubbewegung des Verstellfedertellers erfolgt fast ausschließlich durch einen Kugelgewindetrieb, bei dem der Verstellfederteller während seiner Hubbewegung nicht rotiert sondern drehfest verbleibt, während die relativ schlanke Spindel des Kugelgewindetriebs rotiert, die durch einen im Federbein selbst angeordneten Elektromotor angetrieben wird.

Eine derartige Radaufhängung beschreibt die DE 10 2005 001 744 B3, bei der eine am Federbein oberhalb der Tragfeder konzentrisch angeordnete Speicherfeder vorgesehen ist, die der Federkraft der Tragfeder entgegenwirkt und somit die Verstellkräfte vermindert, die ein elektromechanischer Aktuator bzw. ein Stelltrieb aufbringen muss, um über den axial verstellbaren Federteller des Federbeines eine Niveauverstellung und/oder einen Nick- und Wankausgleich am Kraftfahrzeug zu bewirken. Problematisch ist jedoch die räumliche und funktionell zuverlässige Anordnung des am Federbein integrierten Stelltriebes innerhalb der Speicherfeder, insbesondere bei Radaufhängungen mit gelenkten Rädern, bei denen das Rad einen entsprechenden Freiraum im Radhaus und zu den Radaufhängungselementen benötigt.

Die in der DE 10 2005 001 744 B3 (EP 1 681 189 A2) gezeigte Spindel besitzt zwar eine große Lagerbasis. Jedoch geht durch die Aneinanderreihung von verlängerter Lagerhülse mit ihrer unteren Lagerung wertvoller Bauraum verloren. Dies wirkt sich auf die Dämpferlänge sowie auf den Dämpferhub nachteilig aus. Außerdem wird durch die bei dieser Bauart erforderliche lange Kolbenstange und der langen Lagerhülse das Gesamtgewicht des Federbeins erhöht. Der Dämpfer taucht in den unteren Teil der Spindel ein und wird im Fahrbetrieb kardanisch gegenüber der Spindel ausgelenkt. Dies kann zu einer Berührung zwischen oszillierendem Dämpfer und rotierender Spindel führen. Eine solche Berührung zwischen Dämpfer und Spindel wird weiter durch die an ihrem oberen Ende elastisch gelagerte Kolbenstange begünstigt. Um eine solche Berührung zwischen Dämpfer und Spindel zu vermeiden müsste der radiale Luftspalt zwischen Dämpfer und Spindel entsprechend groß dimensioniert werden. Dies würde jedoch zu einem relativ großem Spindeldurchmesser führen, wodurch jedoch das rotatorische Massenträgheitsmoment der Spindel nachteilig erhöht ist.

Die DE 10 2005 001 744 B3 (EP 1 681 189 A2) bildet den nächstliegenden Stand der Technik und ist das gattungsbildende Dokument.

Aufgabe der Erfindung ist es, eine Federbeinanordnung der gattungsgemäßen Art vorzuschlagen, die eine baulich besonders gedrängte und funktionell zuverlässige Konstruktion sicherstellt.

Diese Aufgabe wird erfindungsgemäß mit den kennzeichnenden Merkmalen des Patentanspruches 1 gelöst. Vorteilhafte Weiterbildungen der Erfindung beschreiben die weiteren Patentansprüche.

Erfindungsgemäß wird vorgeschlagen, dass der Stoßdämpfer mit dem Dämpferrohr nach oben am Aufbau des Kraftfahrzeuges angeordnet ist und dass die Stellspindel des Stelltriebes auf dem Dämpferrohr drehbar gelagert ist. Dies ergibt eine baulich besonders robuste und gedrängte Konstruktion des integrierten Stelltriebes bei vermindertem Teileaufwand, da die bei der gattungsgemäßen Konstruktion erforderliche Führungshülse für die Stellspindel ersatzlos entfallen kann. Ferner kann dadurch der Stelltrieb mit einem kleineren Außendurchmesser ausgeführt werden, was die Einbausituation des gesamten Federbeines mit Tragfeder und Speicherfeder im Kraftfahrzeug verbessert.

Erfindungsgemäß ist somit eine Spindellagerung für ein aktives Federbein bereitgestellt, die auf dem stillstehenden Außenrohr eines auf dem Kopf stehenden Einrohrdämpfers angeordnet ist. Bevorzugt ist daher kein leistungsfähigerer Zweirohrdämpfer erforderlich, da der Aufbau von der Aktuatorik selbst gedämpft wird. Folglich ist vom Dämpfer nur die Dämpfungsarbeit für die ungefederten Massen aufzubringen. D. h., dass nur die Raddämpfung vom Dämpfer übernommen wird. Dies wirkt sich günstig hinsichtlich der radialen Maßkette aus.

Ein Einrohrdämpfer ist im Vergleich zu einem Zweirohrdämpfer mit geringerem Durchmesser dimensioniert. Dies bedeutet auch einen kleineren Durchmesser der Spindel, wodurch sich ein geringeres rotatorisches Massenträgheitsmoment für die Spindel ergibt. Damit kann auch der Spindel-Antriebsmotor in seiner Leistung reduziert werden. Die konzentrisch um die Spindel angeordnete Speicherfeder kann ebenfalls kleiner im Durchmesser ausgeführt sein. Entsprechend kann der um die Speicherfeder angeordnete Faltenbalg in seiner Radialausdehnung reduziert sein. Insgesamt ergibt sich dadurch ein geringeres Gewicht des Federbeins bei gleichzeitig reduziertem Bauraum.

Die Stellspindel kann ohne Beeinträchtigung des Dämpferhubes mit großem Lagerabstand im Bereich ihrer stirnseitigen Enden am Dämpferrohr gelagert sein und somit eine gegen Biegekräfte und -momente besonders unempfindliche Konstruktion des Stelltriebes bilden. Durch die sehr lange Lagerbasis für die Stellspindel sind daher entsprechend die Reaktionskräfte in der Lagerung reduziert, wodurch kleiner dimensionierte, gewichtsgünstige Wälzlager eingesetzt werden können.

Ferner kann die Lagerung der Stellspindel über zwei Wälzlager hergestellt sein, von denen das aufbauseitige Wälzlager ein axial und radial führendes Lager und das zweite Wälzlager ein nur radial führendes Nadellager ist. Dies ermöglicht eine baulich und fertigungstechnisch einfache und montagegünstige Konstruktion, die zudem eine sehr leichtgängige Lagerung der Stellspindel darstellt.

Des Weiteren kann in vorteilhafter Weise der Dämpferzylinder über einen zapfenförmigen Fortsatz und ein aufbauseitiges, gummielastisches Dämpferlager am Aufbau angelenkt sein, wobei das aufbauseitige Wälzlager der Stellspindel bauraum- und montagegünstig auf dem Fortsatz angeordnet ist. Somit ist der Dämpfer fest mit dem Motorgehäuse verbindbar und steht - im Gegensatz zum Stand der Technik - gegenüber der Stellspindel still. Es ist somit bereits eine konventionelle Radiallagerung mit Fest- und Loslager ausreichend, d. h. ohne Axialführung.

Auf Grund der sich somit ergebenden reduzierten radialen Ausdehnung der Maßkettedämpfer - Spindel - Speicherfeder - Faltenbalg ergibt sich eine äußerst platzsparende Gestaltung des aktiven Federbeins. Im Unterschied zum Stand der Technik taucht daher erfindungsgemäß gerade kein im Fahrbetrieb oszillierender Dämpfer in eine rotierende Stellspindel ein. Die Gefahr einer Berührung beider Bauteile ist somit ausgeschlossen. Erfindungsgemäß können der Dämpfer und die Stellspindel bzw. deren Spindellagerung nicht in Axialrichtung aneinander gereiht, sondern ineinander geschachtelt sein. Demzufolge ist - im Gegensatz zum Stand der Technik - hier gerade keine verlängerte Lagerhülse mit unterer Spindellagerung erforderlich, die einem Dämpferhub im Weg wäre. Dadurch kann die Kolbenstange längenreduziert mit geringerem Gewicht ausgelegt werden. Ferner ergibt sich für das System Dämpfer-Kolbenstange eine verlängerte Lagerbasis, was wiederum geringe Abstützkräfte in der Kolben- und Stangeführung bedeutet. Der Dämpfer arbeitet somit mit reduzierter Reibung in den Führungen, wodurch der Fahrkomfort gesteigert wird.

Die Stellspindel kann an ihrem Außenumfang den Rotor des Elektromotors des Stelltriebes tragen, während der um den Rotor angeordnete Stator innerhalb eines topfförmigen Lagergehäuses angeordnet ist, das mit dem aufbauseitigen Federteller und dem Lagerkern des Dämpferlagers eine montagegünstige Baueinheit bildet.

In vorteilhafter Weiterbildung der Erfindung kann die Stellspindel des Stelltriebes zumindest einen ringförmigen, elastischen Anschlag zum Begrenzen des Hubes der Stellmutter aufweisen. Derartige Endanschläge vermeiden bei außergewöhnlichen Betriebssituationen oder Störungen Überbelastungen im Stelltrieb und ggf. Beschädigungen.

Der obere Endanschlag kann dabei am nicht drehenden Motorgehäuse festgelegt sein, gegen den der ebenfalls nicht drehende Verstellfederteller anschlagen kann. Da zwischen Verstellfederteller und dem oberen Endanschlag keine Relativbewegung in Rotationsrichtung vorliegt, sondern sich der Verstellfederteller in Richtung des oberen Endanschlags linear bewegt, kann der obere Endanschlag ein einfacher Elastomer-Ring sein, der eine fehlerhafte Hubbewegung des Verstellfedertellers nach oben abdämpft und auf Null bringt.

Völlig unterschiedlich stellt sich die Situation am unteren Endanschlag dar. Auch hier würde es bei fehlerfrei arbeitender Steuerung keine Berührung zwischen Verstellfederteller und Stellspindel geben. Zur Bewegungsbegrenzung des Verstellfederteller bei einer fehlerhaften Steuerung ist jedoch auch ein unterer Endanschlag vorgesehen, um den Verstellfederteller mechanisch abzubremsen. Im Unterschied zum oberen Endanschlag dreht sich jedoch die Stellspindel gegenüber den nicht drehenden Verstellfederteller. Für den Fall, dass der untere Endanschlag - wie auch der obere Endanschlag - als einfacher Elastomer-Ring ausgeführt wäre, würde sich jedoch der Verstellfederteller unweigerlich am Elastomer-Ring festfahren, da hier der Energieeintrag aus den abzubremsenden Massenträgheitsmomenten der Stellspindel um Vielfaches größer ist als das Antriebsmoment des Elektromotors. Der Elektromotor würde daher nicht in der Lage sein, den einmal festgefahrenen Spindeltrieb wieder zu lösen.

Erfindungsgemäß kann daher der untere Endanschlag zwischen der rotierenden Stellspindel und der drehfesten Stellmutter bzw. des Verstellfedertellers eine, eine Rückstellkraft erzeugende Drehfeder mit einer oder mehreren Windungen sein.

Dabei kann ein Anschlag zwischen der rotierenden Stellspindel und der drehfesten Stellmutter vorgesehen sein und eine eine Rückstellkraft erzeugende Drehfeder mit einer oder mehreren Windungen aufweisen. Durch die Rückstellkraft der Drehfeder kann ein reibungsbedingtes Festklemmen zwischen der drehenden Stellspindel und der nicht drehenden Stellmutter des Stelltriebes im Anschlagbereich vermieden werden.

Insbesondere kann die Drehfeder mit einem angeformten Fanghaken mit einem Anschlagstift im Anschlagbereich zwischen der Stellspindel und der Stellmutter in Eingriff geraten und somit durch Zusammenschnüren der Drehfeder zunehmend als Drehanschlag wirken.

Damit das Massenträgheitsmoment der rotierenden Stellspindel möglichst gering gehalten wird, ist es zweckmäßig, den Anschlagstift mit geringer Masse mit der Stellspindel mit rotieren zu lassen. Der Drehfeder-Anschlag wird im Bereich der Stellmutter, d. h. an ihrem unteren Ende, befestigt. Damit nimmt die Drehfeder, die zwangsläufig mehr Masse besitzt als der Anschlagstift, nicht an der Rotation teil, sondern lediglich an einer Oszillation des Verstellfedertellers. Bei einer Stellhubbewegung des Verstellfedertellers in Richtung unterer Endanschlag wird der Anschlagstift zunächst den Fanghaken der Drehfeder noch nicht berühren, sondern erst bei der letzten Umdrehung vor Erreichen des Endanschlags. Die Rotationsenergie der Stellspindel wird anschließend in Federarbeit umgewandelt. Dadurch kann sich eine reibungsgedämpfte Schwingung einstellen. Demgegenüber wird bei anstehendem Strom die Drehfeder um den Winkel aufgezogen, welcher dem Motormoment und der Federkennlinie entspricht. Im stromlosen Zustand wird die Stellspindel dann in einem momentenfreien Zustand überführt, d. h., die Drehfeder stellt die Stellspindel in die Stellung zurück, in der sie entspannt ist. Ein Festfahren des Spindeltriebes ist auf diese Weise ausgeschlossen, da sich die Kontaktflächen des Anschlagstiftes und des Drehfeder-Anschlags nur in Normalrichtung berühren. Der Drehfeder-Anschlag weist außerdem den Vorteil auf, dass er im Gegensatz zu einem Elastomer-Ring keine progressive, sondern eine lineare Kennlinie besitzt. Außerdem kann der Drehfeder-Anschlag wesentlich weicher ausgelegt werden als ein Elastomer-Ring.

Dabei kann bevorzugt die Drehfeder an der den Verstellfederteller tragenden Stellmutter des Stelltriebes unverdrehbar verankert sein, während an der Stellspindel an deren Endbereich der mit dem Fanghaken zusammenwirkende Anschlagstift befestigt ist. Die Drehfeder wird demgemäss mit der Stellmutter bei aktiviertem Stelltrieb axial verlagert, während die Stellspindel lediglich den eine Kreisbahn ausführenden Anschlagstift trägt und somit ein für die Stellgeschwindigkeit und das Ansprechverhalten des Stelltriebes günstiges, geringes Massenträgheitsmoment aufweist.

Des Weiteren kann auch zwischen dem Verstellfederteller und dem topfförmigen Lagergehäuse des Stators des Elektromotors ein ringförmiger, elastischer Anschlag für die Stellmutter vorgesehen sein.

Der Stelltrieb kann z. B. ein Schraubtrieb mit einer Gewindespindel und einer Gewindemutter sein. Bevorzugt wird jedoch vorgeschlagen, dass der Stelltrieb in an sich bekannter Weise ein Kugelgewindetrieb mit einer Stellspindel, einer Kugelmutter und dazwischen angeordneten Kugeln ist.

Die vorgeschlagene Kombination der Stoßdämpferanordnung (Dämpferrohr oben) und des integrierten Stelltriebes ermöglicht in vorteilhafter Weise den Einsatz eines einfachen Einrohr-Stoßdämpfers, z. B. einem Einrohr-Gasdruck-Stoßdämpfer, da der Aufbau des Kraftfahrzeuges zumindest teilweise über den Stelltrieb beruhigbar ist und im Wesentlichen nur die Dämpfungsarbeit für die ungefederten Massen aufzubringen ist. Dies ist verbunden mit einer Gewichtsverringerung und einer kompakteren Bauweise der Federbeinanordnung im Vergleich beispielsweise zur Verwendung eines Zweirohr-Stoßdämpfers.

Zwei Ausführungsbeispiele der Erfindung sind im Folgenden mit weiteren Einzelheiten näher erläutert. Die schematische Zeichnung zeigt in:
**Fig. 1** einen Längsschnitt durch ein Federbein für eine Radaufhängung von Kraftfahrzeugen, mit einem Teleskop-Stoßdämpfer, einer Tragfeder, einer Speicherfeder und einem elektrischen Aktuator mit einem Kugelgewinde-Stelltrieb;
**Fig. 2** eine Teilansicht des Federbeines gemäß Fig. 1 in vergrößerter Darstellung;
**Fig. 3** eine raumbildliche Ansicht eines dem Federbein gemäß Fig. 1 und 2 entsprechenden Federbeins, jedoch mit einer Drehfeder als Anschlag zwischen der Stellspindel und der Stellmutter des Stelltriebes bei einer fehlerhaften Steuerung des Verstellfedertellers;
**Fig. 4** einen Schnitt entlang der Linie IV - IV der Fig. 3 durch den Anschlag mit Drehfeder;
**Fig. 5** die Drehfeder gemäß den Fig. 3 und 4 in raumbildlicher Darstellung; und
**Fig. 6** eine raumbildliche Ansicht des Federbeins bei fehlerfreier Steuerung des Verstellfedertellers.

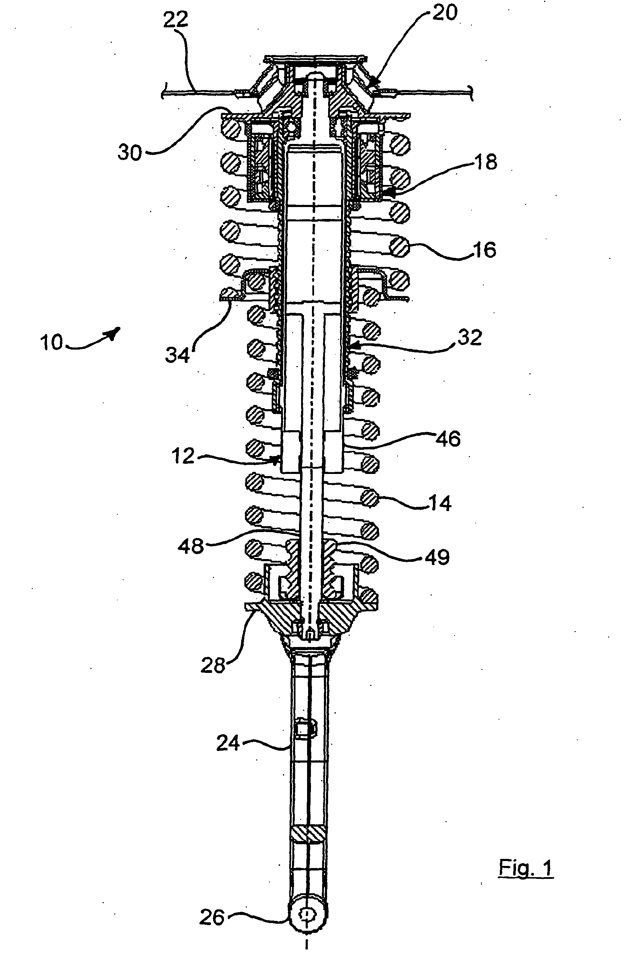

Das Federbein 10 gemäß **Fig. 1** weist im Wesentlichen einen Teleskop-Stoßdämpfer 12, eine Tragfeder 14, eine Speicherfeder 16 und einen elektromechanischen Aktuator 18 auf.

Das Federbein 10 ist an seinem oberen Ende über ein ringförmiges, gummielastisches Dämpferlager 20 am Aufbau 22 (nur angedeutet) des Kraftfahrzeuges angelenkt. Das untere Ende des Federbeines 10 ist über eine Stützstrebe 24 und ein Gummi-Metall-Hülsengelenk 26 mit einem Radaufhängungselement, z.B. einem Lenker oder einem Radträger, gelenkig verbunden.

Die Tragfeder 14 und die Speicherfeder 16 sind wie ersichtlich als Schraubendruckfedern ausgeführt und über Federteller 28, 30 an der Stützstrebe 24 und an dem Aufbau 22 abgestützt. Zwischen der Tragfeder 14 und der Speicherfeder 16 ist ein über einen Stelltrieb 32 axial verschiebbarer Verstellfederteller 34 angeordnet, an dem sich hintereinander geschaltet die Tragfeder 14 und die Speicherfeder 16 abstützen.

Durch axiales Verschieben des Verstellfedertellers 34 über den Stelltrieb 32 kann somit der Aufbau 22 des Kraftfahrzeuges zur Niveauregulierung und/oder Nick- und Wankstabilisierung angehoben oder abgesenkt werden.

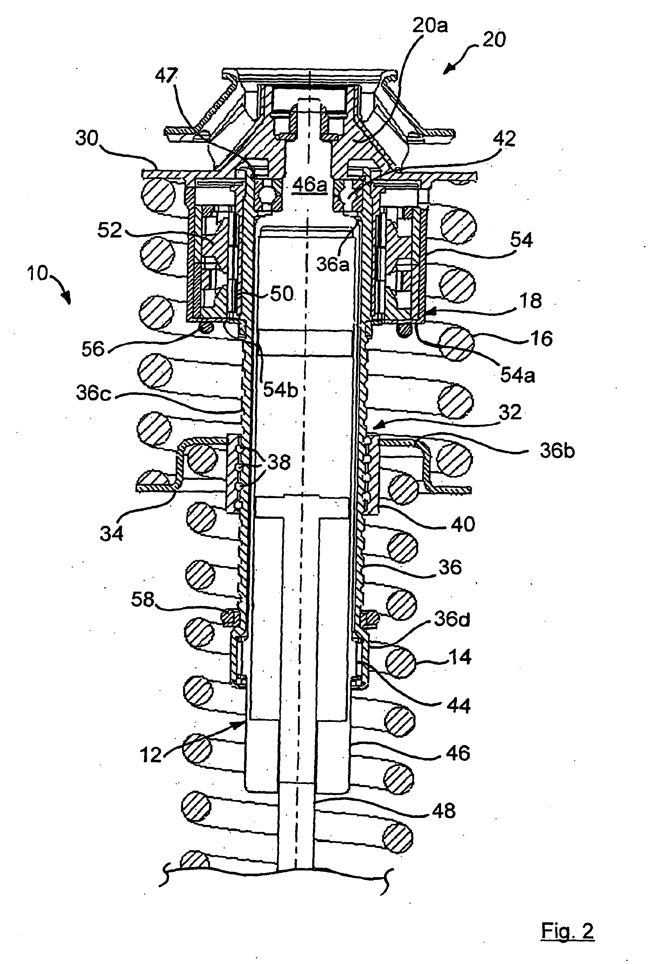

Der Stelltrieb 32 ist ein Kugelgewindetrieb mit einer radial inneren, hülsenförmigen Stellspindel 36 (vgl. **Fig. 2**) und einer über dazwischen angeordnete Kugeln 38 axial verstellbaren Kugelmutter 40. Die Kugelmutter 40 ist fest mit dem Federteller 34 verbunden und über die Stützkraft der beiden Federn 14, 16 unverdrehbar gehalten.

Die Stellspindel 36 ist an ihren beiden stirnseitigen Enden über Wälzlager 42, 44 drehbar auf dem Dämpferrohr 46 des als Einrohr-Gasdruck-Stoßdämpfers 12 an sich bekannter Bauart gelagert, dessen nach unten abragende Kolbenstange 48 fest mit der Stützstrebe 24 (**Fig. 1**) und dem Federteller 28 verbunden ist. An der Kolbenstange 48 ist zudem ein gummielastischer Anschlagpuffer 49 angeordnet, der als Anschlag und Zusatzfeder innerhalb des Federbeines 10 im Zusammenwirken mit dem Dämpferrohr 46 des Stoßdämpfers 12 dient.

Dabei ist das obere Wälzlager ein axial und radial führendes Vierpunktlager 42, dessen innerer Lagerring auf einen zapfenförmigen Fortsatz 46a des Dämpferrohres 46 montiert ist und zwischen dem Dämpferrohr 46 und dem metallischen Lagerkern 20a des Dämpferlagers 20 eingespannt ist, während der Lageraußenring zwischen einer inneren Ringschulter 36a und einem Sicherungsring 47 an der Stellspindel 36 axial festgelegt ist.

Das untere Wälzlager der Stellspindel 36 ist ein nur radial führendes Nadellager 44, das unmittelbar auf dem Dämpferrohr 46 und innerhalb der Stellspindel 36 angeordnet ist.

Die Stellspindel 36 trägt an ihrem Außenumfang einen Rotor 50, der mit einem ringförmigen Stator 52 den elektromotorischen Antrieb der Stellspindel 36 in beiden Drehrichtungen bildet. Der Stator 52 mit entsprechenden elektrischen Wicklungen ist in einem topfförmigen Lagergehäuse 54 angeordnet, durch dessen Boden 54a die Stellspindel 36 über eine Bohrung 54b herausgeführt ist. Am Boden 54a des Lagergehäuses 54 ist ein ringförmiger gummielastischer Anschlag 56 vorgesehen, gegen den der Verstellfederteller 34 mit seiner Ringschulter 36b anlaufen kann.

Ferner bildet das Lagergehäuse 54 wie aus der **Fig. 2** ersichtlich ist mit dem oberen Federteller 30 und dem Lagerkern 20a des Dämpferlagers 20 eine Baueinheit.

Am Ende der in die Stellspindel 36 eingearbeiteten, schraubenförmigen Kugelbahnen 36c im Bereich des Nadellagers 44 ist ein weiterer ringförmiger, gummielastischer Anschlag 58 vorgesehen, an dem die Kugelmutter 40 zur Begrenzung des maximal möglichen Verstellhubes des verschiebbaren Federtellers 34 anlaufen kann. Die entsprechenden Federringe sind dabei über den Boden 54a und die Ringschulter 36b einerseits und über den im Außendurchmesser vergrößerten Abschnitt 36d der Stellspindel 36 andererseits axial abgestützt.

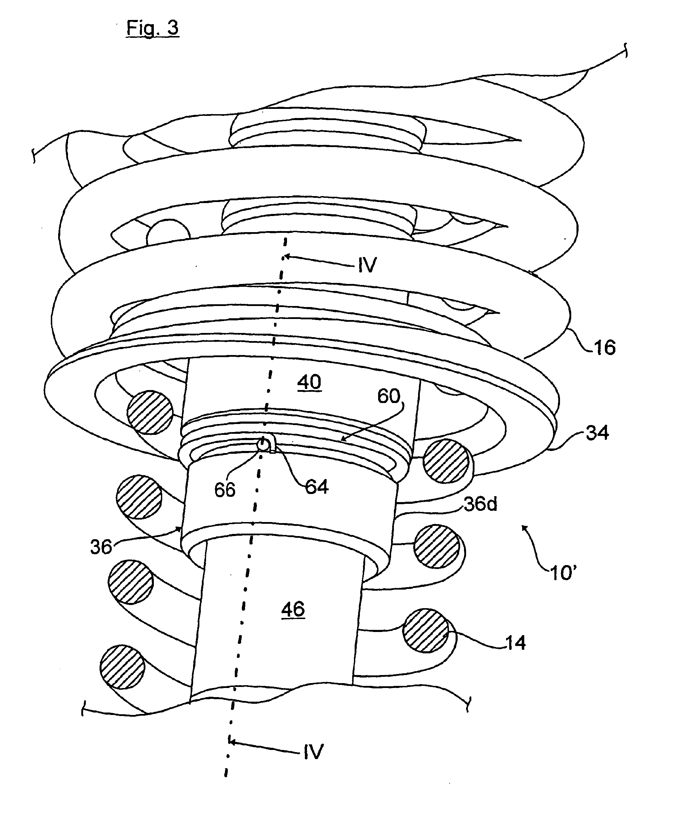

Die **Fig. 3****,** **4** **und** **6** zeigen ein Federbein 10', bei dem der untere Anschlag zwischen der Stellhülse 36 und der Kugelmutter 40 mit dem Federteller 34 mit einer eine Rückstellkraft erzeugenden Drehfeder 60 ausgeführt ist.

Dazu weist die Drehfeder 60 (vgl. **Fig. 3 bis 6**) an den Enden ihrer über den Umfang der Stellspindel 36 verlaufenden Windungen einerseits einen axial abragenden Arretierschenkel 62 und andererseits einen ebenfalls axial abragenden Fanghaken 64 auf.

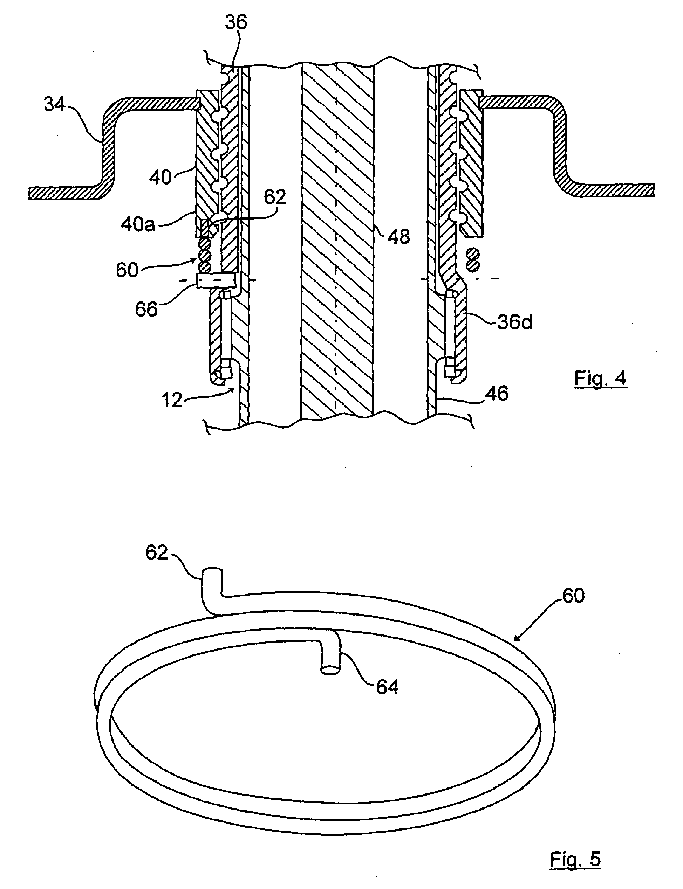

Über den Arretierschenkel 62 (vgl. **Fig. 4**) ist die Drehfeder 60 in einer stirnseitigen Bohrung 40a der Kugelmutter 40 fest gehalten und wird somit bei einer axialen Verschiebung der Kugelmutter 40 entsprechend mitverlagert.

Ferner ist in die Stellspindel 36 am Übergang in den Abschnitt 36d ein radial abragender Anschlagstift 66 fest eingesetzt, der dementsprechend bei rotierender Stellspindel 36 eine Kreisbahn beschreibt.

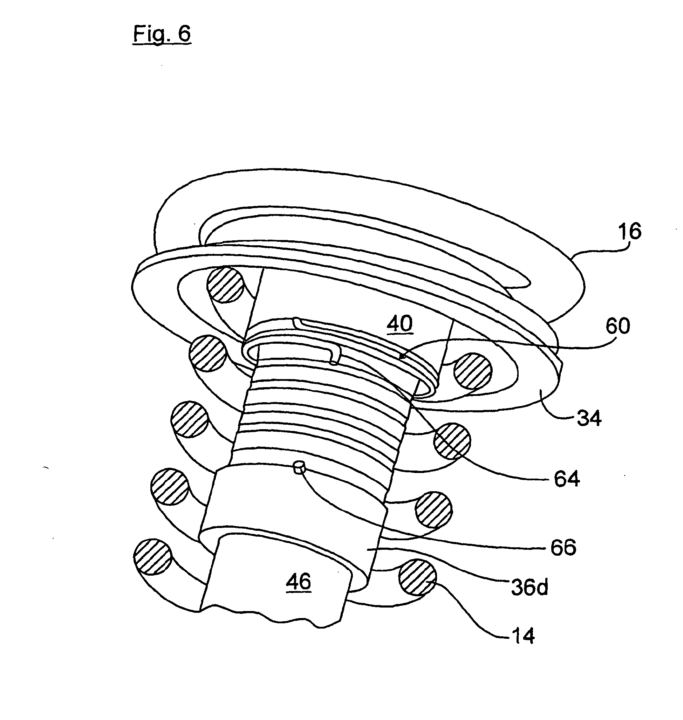

In der **Fig. 6** ist der Zustand des Federbeins bei einer fehlerfreien Steuerung des Verstellfedertellers 34 gezeigt. Demnach ist der Verstellfederteller 34 weder mit dem oberen noch mit dem unteren Anschlag in Anlage. Erst bei einer fehlerhaften Steuerung des Verstellfedertellers 34 kann dieser in Anlage mit dem unteren Anschlagstift 66 kommen.

Bei einer solchen axialen Verstellung der Kugelmutter 40 mit der Drehfeder 60 in den Bereich des Anschlagstiftes 66 gerät der Fanghaken 64 der Drehfeder 60 mit dem Anschlagstift 66 derart in Wirkverbindung (vgl. **Fig. 3**), dass durch die Drehung der Stellspindel 36 die Drehfeder 60 eingeschnürt wird und dabei eine zunehmende Rückstellkraft bis hin zu einer Drehblockierung der Stellspindel 36 erzeugt. Es versteht sich, dass die Wicklung der Drehfeder 60 entsprechend ausgerichtet sein muss.

Durch die in der Anschlagstellung ausgeübte Rückstellkraft der Drehfeder 60 kann die Stellspindel 36 ohne größeres aufzubringendes Drehmoment über den Elektromotor 50, 52 gegenüber der unverdrehbar gehaltenen Kugelmutter 40 wieder freigefahren werden.

Die Drehfeder 60 kann wie dargestellt im Querschnitt ein Rundprofil oder ggf. auch ein Rechteckprofil aufweisen. Anstelle mehrerer Windungen kann auch nur eine Windung vorgesehen sein.

## Patentansprüche

1. Federbeinanordnung für Radaufhängungen von Kraftfahrzeugen, die aus einem Teleskop-Stoßdämpfer (12), einem vorzugsweise als Schraubendruckfeder ausgeführten Tragfederelement (14) und einem vorzugsweise als Schraubendruckfeder ausgeführten Speicherfederelement (16) gebildet is, wobei die Federbeinanordnung weiterhin drei Federteller (28, 30, 34) und einen elektrisch angetriebenen Stelltrieb (32) umfasst, wobei die Federelemente (14, 16) über Federteller (28, 30) am Aufbau (22) des Kraftfahrzeuges und an einem Radaufhängungselement (24) abgestützt sind und ein dazwischen befindlicher, dritter Federteller (34) über den innerhalb der Federelemente (14, 16) angeordneten, elektrisch angetriebenen Stelltrieb (32) relativ zum Aufbau (22) entlang der Stoßdämpfer-Längsachse verschiebbar geführt ist, wobei der Stelltrieb (32) eine drehbar um den Stoßdämpfer (12) gelagerte Stellspindel (36) und eine mit dem verschiebbaren Federteller (34) verbundene Stellmutter (40) aufweist, **dadurch gekennzeichnet, dass** der Stoßdämpfer (12) mit dem Dämpferrohr (46) nach oben am Aufbau (22) des Kraftfahrzeuges angeordnet ist und dass die Stellspindel (36) auf dem Dämpferrohr (46) drehbar gelagert ist.

2. Federbeinanordnung nach Anspruch 1, **dadurch gekennzeichnet, dass** die Stellspindel (36) mit großen Lagerabstand im Bereich ihrer stirnseitigen Enden am Dämpferrohr (46) gelagert ist.

3. Federbeinanordnung nach Anspruch 1 oder 2, **dadurch gekennzeichnet, dass** die Lagerung der Stellspindel (36) über zwei Wälzlager
hergestellt ist, von denen das aufbauseitige Wälzlager ein axial und radial führendes Lager (42) und das zweite Wälzlager ein nur radial führendes Nadellager (44) ist.

4. Federbeinanordnung nach einem der vorhergehenden Ansprüche, dadurch g**ekennzeichnet**, dass das Dämpferrohr (46) über einen zapfenförmigen Fortsatz (46a) und ein aufbauseitiges, gummielastisches Dämpferlager (20) am Aufbau (22) angelenkt ist und dass das aufbauseitige Wälzlager (42) der Stellspindel (36) auf dem Fortsatz (46a) angeordnet ist.

5. Federbeinanordnung nach einem der vorhergehenden Ansprüche, **dadurch gekennzeichnet, dass** die Stellspindel (36) an ihrem Außenumfang den Rotor (50) des Elektromotors (50, 52, 54) des Stelltriebes (36) trägt und dass der um den Rotor (50) angeordnete Stator (52) innerhalb eines topfförmigen Lagergehäuses (54) angeordnet ist, das mit dem aufbauseitigen Federteller (30) und dem Lagerkern (20a) des Dämpferlagers (20) eine Baueinheit bildet.

6. Federbeinanordnung nach einem der vorhergehenden Ansprüche, **dadurch gekennzeichnet, dass** die Stellspindel (36) des Stelltriebes (32) zumindest einen ringförmigen, elastischen Anschlag (56, 58, 60) zum Begrenzen des Hubes der Stellmutter (40) aufweist.

7. Federbeinanordnung nach Anspruch 6, **dadurch gekennzeichnet, dass** der Anschlag zwischen der Stellspindel (36) und der Stellmutter (40) vorgesehen ist, und vorzugsweise eine eine Rückstellkraft erzeugende Drehfeder (60) mit einer oder mehreren Windungen aufweist.

8. Federbeinanordnung nach den Ansprüchen 6 und 7, **dadurch gekennzeichnet, dass** die Drehfeder (60) mit einem angeformten Fanghaken (64) mit einem Anschlagstift (66) im Anschlagbereich zwischen der Stellspindel (36) und der Stellmutter (40) in Eingriff gerät.

9. Federbeinanordnung nach den Ansprüchen 6 bis 8, **dadurch gekennzeichnet, dass** die Drehfeder (60) an der Stellmutter (40) des Stelltriebes (32) unverdrehbar verankert ist und dass an der Stellspindel (36) an deren Endbereich der mit dem Fanghaken (64) zusammenwirkende Anschlagstift (66) befestigt ist.

10. Federbeinanordnung nach Anspruch 6, **dadurch gekennzeichnet, dass** zwischen der Stellspindel (36) und dem topfförmigen Lagergehäuse (54) des Stators (52) des Elektromotors ein ringförmiger, elastischen Anschlag (56) für die Stellmutter (40) vorgesehen ist.

11. Federbeinanordnung nach einem der vorhergehenden Ansprüche, **dadurch gekennzeichnet, dass** der Stelltrieb ein Kugelgewindetrieb (32) mit einer Stellspindel (36), einer Kugelmutter (40) und dazwischen angeordneten Kugeln (38) ist.

12. Federbeinanordnung nach einem der vorhergehenden Ansprüche, **dadurch gekennzeichnet, dass** der Stoßdämpfer ein auf dem Kopf stehender Einrohr-Stoßdämpfer (12) ist.

## Claims

1. Spring strut arrangement for wheel suspensions of motor vehicles, which spring strut arrangement is formed from a telescopic shock-absorbing damper (12), a load-bearing spring element (14) designed preferably as a helical compression spring, and a store spring element (16) designed preferably as a helical compression spring, the spring strut arrangement also comprising three spring plates (28, 30, 34) and an electrically driven adjusting drive (32), the spring elements (14, 16) being supported on the body (22) of the motor vehicle and on a wheel suspension element (24) via spring plates (28, 30), and a third spring plate (34) which is situated between said spring elements (14, 16) being guided movably relative to the body (22) along the shock-absorbing damper longitudinal axis by means of the electrically driven adjusting drive (32) arranged within the spring elements (14, 16), the adjusting drive (32) having an adjusting spindle (36) mounted so as to be rotatable about the shock-absorbing damper (12) and having an adjusting nut (40) connected to the movable spring plate (34), **characterized in that** the shock-absorbing damper (12) is arranged with the damper tube (46) pointing upward on the body (22) of the motor vehicle, and **in that** the adjusting spindle (36) is rotatably mounted on the damper tube (46).

2. Spring strut arrangement according to Claim 1, **characterized in that** the adjusting spindle (36) is mounted, with a large bearing spacing, in the region of its face-side ends on the damper tube (46).

3. Spring strut arrangement according to Claim 1 or 2, **characterized in that** the mounting of the adjusting spindle (36) is realized by means of two rolling bearings, of which the body-side rolling bearing is a bearing (42) providing axial and radial guidance and the second rolling bearing is a needle-roller bearing (44) providing only radial guidance.

4. Spring strut arrangement according to one of the preceding claims, **characterized in that** the damper tube (46) is articulatedly connected to the body (22) by means of a peg-shaped projection (46a) and a body-side resiliently elastic damper mount (20), and **in that** the body-side rolling bearing (42) of the adjusting spindle (36) is arranged on the projection (46a).

5. Spring strut arrangement according to one of the preceding claims, **characterized in that** the adjusting spindle (36) bears, on its outer circumference, the rotor (50) of the electric motor (50, 52, 54) of the adjusting drive (36), and **in that** the stator (52) arranged around the rotor is arranged within a pot-shaped bearing housing (54) which forms a structural unit with the body-side spring plate (30) and the mount core (20a) of the damper mount (20).

6. Spring strut arrangement according to one of the preceding claims, **characterized in that** the adjusting spindle (36) of the adjusting drive (32) has at least one annular elastic stop (56, 58, 60) for limiting the travel of the adjusting nut (40).

7. Spring strut arrangement according to Claim 6, **characterized in that** the stop is provided between the adjusting spindle (36) and the adjusting nut (40) and preferably has a torsion spring (60) which has one or more windings and which generates a restoring force.

8. Spring strut arrangement according to Claims 6 and 7, **characterized in that** the torsion spring (60) engages by means of an integrally formed catch hook (64) on a stop pin (66) in the stop region between the adjusting spindle (36) and the adjusting nut (40).

9. Spring strut arrangement according to Claims 6 to 8, **characterized in that** the torsion spring (60) is anchored in a non-rotatable manner on the adjusting nut (40) of the adjusting drive (32), and **in that** the stop pin (66) which interacts with the catch hook (64) is fastened to the adjusting spindle (36) in the end region thereof.

10. Spring strut arrangement according to Claim 6, **characterized in that** an annular elastic stop (56) for the adjusting nut (40) is provided between the adjusting spindle (36) and the pot-shaped bearing housing (54) of the Stator (52) of the electric motor.

11. Spring strut arrangement according to one of the preceding claims, **characterized in that** the adjusting drive is a ball screw (32) with an adjusting spindle (36), a ball nut (40) and balls (38) arranged in between.

12. Spring strut arrangement according to one of the preceding claims, **characterized in that** the shock-absorbing damper is an inverted single-tube shock-absorbing damper (12).

## Revendications

1. Ensemble jambe de force pour suspensions de roue de véhicules automobiles prenant la forme d'un amortisseur télescopique (12), d'un élément de ressort porteur (14) prenant de préférence la forme d'un ressort de compression à vis et d'un élément de ressort accumulateur (16) prenant de préférence la forme d'un ressort de compression à vis, l'ensemble jambe de force comportant en outre trois coupelles de ressort (28, 30, 34) et un mécanisme de réglage (32) à entraînement électrique, les éléments de ressort (14, 16) s'appuyant contre la structure (22) du véhicule automobile et contre un élément de suspension de roue (24) par le biais de coupelles de ressort (28, 30) et une troisième coupelle de ressort (34) interposée étant introduite de façon coulissante, par le bais du mécanisme de réglage (32) à entraînement électrique disposé à l'intérieur des éléments de ressort (14, 16), par rapport à la structure (22), le long de l'axe longitudinal de l'amortisseur, le mécanisme de réglage (32) comportant une broche de réglage (36) rotative tournant autour de l'amortisseur (12) et un écrou de réglage (40) relié aux coupelles de ressort (34) coulissantes, **caractérisé en ce que** l'amortisseur (12) est disposé avec le tube d'amortisseur (46) vers le haut au niveau de la structure (22) du véhicule automobile et que la broche de réglage (36) est disposée de façon à pouvoir tourner sur le tube d'amortisseur (46).

2. Ensemble jambe de force selon la revendication 1, **caractérisé en ce que** la broche de réglage (36) est disposée contre le tube d'amortisseur (46), avec une grande distance de palier dans la zone de ses extrémités frontales.

3. Ensemble jambe de force selon la revendication 1 ou 2, **caractérisé en ce que** le palier de la broche de réglage (36) est réalisé à l'aide de deux paliers à rouleau dont le palier à rouleau situé du côté de la structure est un palier (42) à guidage axial et radial tandis que le deuxième palier à rouleau n'est qu'un palier à aiguille (44) à guidage radial.

4. Ensemble jambe de force selon l'une quelconque des revendications précédentes, **caractérisé en ce que** le tube d'amortisseur (46) est rattaché de façon articulée à la structure (22) par le biais d'un appendice (46a) en forme de tenon et d'un palier d'amortisseur (20) élastique en caoutchouc situé du côté de la structure et que le palier à rouleau (42) de la broche de réglage (36), situé du côté de la structure, est disposé sur l'appendice (46a).

5. Ensemble jambe de force selon l'une quelconque des revendications précédentes, **caractérisé en ce que** la broche de réglage (36) porte au niveau de son périmètre extérieur le rotor (50) du moteur électrique (50, 52, 54) du mécanisme de réglage (36) et que le stator (52) disposé autour du rotor (50) est disposé à l'intérieur d'un carter de palier (54) en forme de cuvette qui forme, avec la coupelle de ressort (30) située du côté de la structure et le centre de palier (20a) du palier d'amortisseur (20), une unité fonctionnelle.

6. Ensemble jambe de force selon l'une quelconque des revendications précédentes, **caractérisé en ce que** la broche de réglage (36) du mécanisme de réglage (32) comporte au moins une butée (56, 58, 60) élastique de forme annulaire pour limiter le soulèvement de l'écrou de réglage (40).

7. Ensemble jambe de force selon la revendication 6, **caractérisé en ce que** la butée est prévue entre la broche de réglage (36) et l'écrou de réglage (40) et comporte de préférence un ressort de torsion (60) exerçant une force de rappel au moyen d'un ou de plusieurs enroulements.

8. Ensemble jambe de force selon les revendications 6 et 7, **caractérisé en ce que** le ressort de torsion (60) est mis en prise avec un crochet d'attelage (64) connexe doté d'une tige de butée (66) dans la zone de butée située entre la broche de réglage (36) et l'écrou de réglage (40).

9. Ensemble jambe de force selon les revendications 6 à 8, **caractérisé en ce que** le ressort de torsion (60) est ancré de façon à ne pas pouvoir tourner au niveau de l'écrou de réglage (40) du mécanisme de réglage (32) et que la tige de butée (66) interagissant avec le crochet d'attelage (64) est fixée au niveau de la broche de réglage (36), au niveau de sa zone d'extrémité.

10. Ensemble jambe de force selon la revendication 6, **caractérisé en ce qu'**une butée (56) élastique de forme annulaire est prévue pour l'écrou de réglage (40) entre la broche de réglage (36) et le carter de palier (54) en forme de cuvette du stator (52) du moteur électrique.

11. Ensemble jambe de force selon l'une quelconque des revendications précédentes, **caractérisé en ce que** le mécanisme de réglage est un mécanisme à filetage sphérique (32) doté d'une broche de réglage (36), d'un écrou sphérique (40) et de billes (38) interposées.

12. Ensemble jambe de force selon l'une quelconque des revendications précédentes, **caractérisé en ce que** l'amortisseur est un amortisseur à un tube (12) se dressant sur la tête.
